# EUROPÄISCHE PATENTSCHRIFT

(11) **EP 1 762 418 B1**
(45) Veröffentlichungstag und Bekanntmachung des Hinweises auf die Patenterteilung: **25.03.2009**
(21) Anmeldenummer: 06003831.2
(22) Anmeldetag: 24.02.2006
(51) Int. Cl.: B60K 15/00, B60R 25/10

(54) **Kraftstoffdiebstahlmeldeanlage**
Fuel theft alarming system
Système d'alarme de vol de carburant

(30) Priorität: 09.09.2005 DE 102005042829
(43) Veröffentlichungstag der Anmeldung: 14.03.2007
(73) Patentinhaber: Götzger, Christian, 86899 Landsberg am Lech (DE); Hehle, Bernhard, 6912 Hörbranz (AT)
(72) Erfinder: Götzger, Christian, 86899 Landsberg am Lech (DE); Hehle, Bernhard, 6912 Hörbranz (AT)

(56) Entgegenhaltungen:
- DE-A1- 4 422 889
- DE-A1- 10 021 721
- DE-U1-0202005 002 32
- FR-A- 2 476 354
- FR-A- 2 580 566
- GB-A- 2 338 308

## Beschreibung

Die vorliegende Erfindung betrifft eine Kraftstoffdiebstahlmeldeanlage (KDMA).

GB 2338308 A offenbart eine Kraftstoffdiebstahlmeldeanlagegemäß dem Oberbegriff des Anspruchs 1. Darin wird jedoch einem flüchtigen Kraftstoffdieb nicht Rechnung getragen. Dieser Nachteil wird durch die Merkmale des Anspruchs 1 behoben. Vorteilhafte Weiterführungen ergeben sich aus den abhängigen Ansprüchen.

Die KDMA muss vom Bordnetz des betreffenden Fahrzeuges aus mit Strom versorgt werden. Für die Information, ob Zündung an oder Zündung aus ist, benötigt man ebenfalls eine hardwareseitige Verbindung.
Wird ein Kraftfahrzeug nach Beendigung der Tätigkeit abgestellt und die Zündung abgeschaltet, so beginnt ein Timer zu laufen, der nach ca. 5 - 10 Minuten (Zeit einstellbar), die KDMA in Betrieb setzt. Die KDMA überwacht nun mittels eines Drucktransmitters, der im Tank oder in der Kraftstoffleitung angebracht ist, den statischen Druck des Tankinhaltes.

Ändert sich nun der Druck, vorzugsweise fallend, (durch Sonneneinstrahlung kann sich der Druck auch nach oben ändern, in diesem Fall darf keine Alarmmeldung aktiviert werden) ändert sich der vom Drucktransmitter aufgenommene Wert nach unten und die KDMA wird aktiv.

Aktiv bedeutet: Das Auswertegerät bekommt die Information, dass der Druck im Tank fällt, und löst Alarm aus:
1. es kann die bordeigene Alarmanlage ausgelöst werden
2. mittels Modem kann eine SMS an eine beliebige Handynummer gesendet werden.
3. Mit GPS kann ein Standortsignal mit Warnmeldung an eine Überwachungszentrale gesendet werden (z.B. Spedition oder Polizeidienststelle).

Des weitern besteht die Möglichkeit, in dem Treibstofftank einen Peilsender anzubringen. Der Peilsender wird im Tank mit einem Elektromagneten von außen an der Tankwandung im Tank gehalten, um ein herunterfallen bzw. ein Ansaugen in den Motor zu verhindern. Der Akku des Peilsenders wird zusätzlich über eine Induktionsschleife permanent geladen und ist somit immer einsatzbereit.
Wird nun vom Auswertegerät eine Alarmmeldung ausgelöst, wird gleichzeitig mit den gewünschten Meldungen, der Magnet, der den Peilsender festhält, gelöst und der Sender fällt in den Tank. Der Sender ist im Sprit schwimmfähig und wird vom Treibstoffdieb mit in seinen Tank gesaugt.
Das so gekennzeichnete Fluchtfahrzeug kann nun ebenfalls von einer GPS Zentrale aus verfolgt werden und ist somit relativ leicht auffindbar.

### Kraftstoffdiebstahlmeldeanlage:

Unsere Erfindung ist Zubehör für Anlagen oder Fahrzeuge aller Art, die mit Verbrennungsmaschinen mittels Flüssigtreibstoff betrieben werden können.

Immer wieder hört man von Mitarbeitern auf Baustellen oder Kraftfahrern, dass der Spritklau ein nicht in den Griff zu bringendes Problem ist und es keine technische Einrichtung gibt, um hier widerstandsfähig zu werden. Darum wollen wir hier eine Möglichkeit schaffen, mit der man in der Lage sein wird, Füllstände zu überwachen.

Das Problem entstand durch die immer stärker werdende Kriminalität auf dem Gebiet des Kraftstoffdiebstahls, aufgrund der immer weiter steigenden Spritpreise.

Die Kraftstoffdiebstahlmeldeanlage komplett, mit allen den in der Beschreibung aufgeführten Funktionen. Eine Warnanlage die ein außerbetriebliches Entleeren des Tanks erkennt und technisch in der Lage ist, eine Alarmmeldung zu geben oder ein Signal weiterzuleiten.

Die gewerbliche und privatgebräuchliche Anwendung unserer Erfindung ist in allen Bereichen, in denen Flüssigbrennstoff verwendet wird, einzusetzen.

Momentan gibt es keine technische Einrichtung, die es ermöglicht, eine Überwachung bzw. eine Fernüberwachung der Tankfüllstände zu realisieren. Wir wollen mit unserer Erfindung der Kraftstoffdiebstahl-Kriminalität Einhalt gebieten, und den Betroffenen Firmen und Personen zu mehr Sicherheit und Zuverlässigkeit auf diesem Gebiet verhelfen.

Unsere Anlage erkennt eine Entleerung bzw. ein Fallen des Füllstandes. Dadurch wird ein Signal ausgelöst, das steuerungstechnisch erfasst und in eine kundenspezifische Meldung umgesetzt wird.

## Patentansprüche

1. Kraftstoffdiebstahlmeldeanlage umfassend einen Drucktransmitter zur Überwachung des Flüssigkeitsstandes und ein Auswertegerät zur Auslösung einer Alarmmeldung, **gekennzeichnet durch** einen im Tank mit einem Elektromagnet von außen an der Tankwandung anbringbaren schwimmfähigen Peilsender, wobei das Auswertegerät dafür ausgelegt ist, bei Auslösen einer Alarmmeldung den Elektromagnet zu lösen, so dass der Peilsender in den Tank fällt.

2. Anlage nach Anspruch 1, **dadurch gekennzeichnet, dass** der Akku des Peilsenders über eine Induktionsschleife permanent geladen werden kann.

3. Anlage nach einem der Ansprüche 1 oder 2, **dadurch gekennzeichnet, dass** der Peilsender ein GPS-Sender ist und von einer GPS-Zentrale aus verfolgt werden kann.

## Claims

1. Fuel theft alarm system comprising a pressure transmitter for the monitoring of the fluid level and an evaluation unit for alarm release, **characterized by** a floatable direction-finding transmitter affixed by an electromagnet placed on the outside of the tank wall. The evaluation unit is designed to loosen the electromagnet as soon as an alarm is released, so that the direction-finding transmitter falls into the tank.

2. Equipment pursuant to claim 1, **characterized by** a battery of the direction-finding transmitter permanently chargeable by an induction control loop.

3. Equipment pursuant to claim 1 or 2, **characterized by** a GPS transmitter that may be tracked by a GPS control centre.

## Revendications

1. Dispositif de détection du vol de carburant comportant un transmetteur de pression pour surveiller le niveau de remplissage, et un appareil d'évaluation pour déclencher un message d'avertissement, **caractérisé en ce qu'**une balise de localisation flottable peut être installée à l'intérieur du réservoir a essence en utilisant un électroaimant appliqué à l'extérieur de la paroi du réservoir, l'appareil d'évaluation étant conçu de la sorte qu'il détache l'électroaimant dès qu'un message d'alarme a été généré de sorte que la balise de localisation tombe dans le réservoir à essence.

2. Dispositif selon revendication 1, **caractérisé en ce que** l'accu de la balise de localisation peut être chargé en continu au moyen d'une boucle d'induction.

3. Dispositif selon revendication 1 ou 2, **caractérisé en ce que** la balise de localisation représente une balise GPS et peut être suivie à partir d'une centrale GPS.
